Europäisches Patentamt

European Patent Office

Office européen des brevets

(11) Veröffentlichungsnummer: **0 204 152**
**B1**

(12) **EUROPÄISCHE PATENTSCHRIFT**

(45) Veröffentlichungstag der Patentschrift:
**18.10.89**

(51) Int. Cl.⁴: **A 01 K 1/015**

(21) Anmeldenummer: **86106004.4**

(22) Anmeldetag: **01.05.86**

(54) **Tierstreu sowie Verfahren zur Herstellung derselben.**

(30) Priorität: **07.06.85 DE 3520384**

(43) Veröffentlichungstag der Anmeldung:
**10.12.86 Patentblatt 86/50**

(45) Bekanntmachung des Hinweises auf die Patenterteilung:
**18.10.89 Patentblatt 89/42**

(84) Benannte Vertragsstaaten:
**AT BE CH DE FR GB IT LI LU NL SE**

(56) Entgegenhaltungen:
**EP-A- 0 013 935**
**EP-A- 0 109 276**
**EP-A- 0 192 276**

(73) Patentinhaber: **Effem GmbH, Eitzer Landstrasse,
D-2810 Verden/Aller (DE)**

(72) Erfinder: **Lang, Rüdiger, Buhnstrasse 76, D-4973 Vlotho
(DE)**

(74) Vertreter: **Goddar, Heinz J., Dr. et al, FORRESTER &
BOEHMERT Widenmayerstrasse 4/I,
D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Tierstreu nach dem Oberbegriff des Anspruchs 1 sowie ein Verfahren zur Herstellung derselben.

Bekannte Materialien zur Herstellung von Tierstreu sind meist Naturprodukte mineralischen oder organischen Ursprungs, wie Bimsstein, Tonmineralien, Molenerde, Holzmehle, Torf und Kieselgur, die aufgrund ihrer Poren aufweisenden Struktur die Eigenschaft besitzen, Flüssigkeiten in diese Poren aufzunehmen.

Aus der DE-B-2 902 079 ist eine Tierstreu bekannt, bei der künstlich hergestelltes Calciumsilikathydratgranulat (C-S-H) mit Tobermoritstruktur verwendet wird. Aus der DE-C-3 121 403 ist eine Tierstreu der gattungsgemäßen Art bekannt, bei welcher zur Geruchsbindung mit sauren Materialien der pH-Wert auf einen Wert zwischen etwa 5,8 und 6,2, bei wässriger Aufschlämmung, abgesenkt ist.

Die Praxis hat gezeigt, daß das vorstehend beschriebene, zur Verwendung als Tierstreu bereits bekannte C-S-H nur im alkalischen Bereich ausreichend stabil ist, so daß die Absenkung des pH-Wertes dieses Materials auf einen Wert unter 7 die Gefahr einer Granulat- bzw. Porenzerstörung mit sich bringt, wodurch die geruchsbindende Wirkung in Frage gestellt wird. Beim Einsatz von Säuren erfolgt dieser Vorgang sehr schnell, d.h. also, im Laufe von Stunden, während bei Verwendung saurer Metallsalzlösungen der Vorgang verlangsamt abläuft, jedoch immer noch zu einer Beeinträchtigung der Geruchsbindung führt.

Andererseits ist aus der EP-A-0 109 276 die Behandlung verschiedener fester Absorptionsmaterialien mit wasserlöslichen Salzen von Übergangsmetallen aus den Gruppen I b oder II b des Periodensystems bekannt, wobei diese Materialien bei Verwendung als Tierstreu eine verbesserte Geruchsbindungswirkung aufweisen sollen. Bei Anwendung auf C-S-H läßt sich jetzt jedoch auch dabei ohne Einhaltung eines bestimmten Bereiches des pH-Wertes die Ammoniakentwicklung nicht wirkungsvoll und dauerhaft verhindern.

Der Erfindung liegt daher die Aufgabe zugrunde, eine Tierstreu der gattungsgemäßen Art sowie ein Verfahren zu deren Herstellung zu schaffen, durch welche die Ammoniakbildung auch bei C-S-H wirkungsvoll verhindert wird und gleichzeitig die geruchsintensiven schwefelhaltigen Stoffe, wie sie beispielsweise im Katzenurin enthalten sind, zuverlässig gebunden werden können.

Erfindungsgemäß wird diese Aufgabe durch eine Tierstreu der eingangs genannten Art mit den Merkmalen des kennzeichnenden Teils von Anspruch 1 gelöst.

Das erfindungsgemäße Verfahren der eingangs genannten Art zeichnet sich durch die Merkmale des kennzeichnenden Teils von Anspruch 5 aus.

Vorteilhafte Ausführungsformen der Erfindung ergeben sich aus den jeweiligen Unteransprüchen.

Der Erfindung liegt die überraschende Erkenntnis zugrunde, daß eine zuverlässige Lösung der gestellten Aufgabe nur dann erreicht werden kann, wenn in der beanspruchten Weise sowohl der erfindungsgemäß vorgesehene pH-Wert als auch der erfindungsgemäß vorgesehene Zinkgehalt in Kombination eingestellt werden, und zwar unter Verwendung von wasserlöslichen Zinksalzen: Diese reagieren aufgrund ihres amphoteren Charakters nicht vollständig mit dem vorzugsweise verwendeten Trägermaterial C-S-H, so daß auch noch Monate nach der Herstellung der Tierstreu ausreichend wasserlösliches Zink vorhanden ist. Der pH-Wert des Produktes liegt üblicherweise auch nach drei bis sechs Monaten noch im Bereich von 8,0 bis 8,5. Damit ist einerseits eine hinreichende Absenkung des pH-Wertes erreicht, die einer Ammoniakentwicklung wirkungsvoll vorbeugt, andererseits liegt das Material immer noch im alkalischen Bereich, mit der Folge, daß einerseits das C-S-H stabil ist und daß andererseits das Zink noch in der Lage ist, stabile Komplexverbindungen mit den geruchsintensiven schwefelhaltigen Stoffen, wie sie zum Beispiel im Katzenurin enthalten sind, zu bilden.

Die beanspruchten pH-Werte, gemessen in wäßriger Lösung, verstehen sich bei einer wie folgt vorgesehenen Bestimmungsmethode: aus einer homogenen Probe (500 g) des CSH-Materials werden 10 g auf 0,1 g genau in ein 250 ml-Becherglas eingewogen. Die so erhaltene Probe wird mit 90 ml temperierten dest. Wassers von 20°C übergossen, mit einem Glasstab kurz durchgerührt und 4½ Minuten stehen gelassen. Anschließend erfolgt ein 30 Sekunden andauerndes Rühren mit anschließender sofortiger pH-Messung, wobei der pH-Wert nach 1 Minute abgelesen wird.

Weitere Merkmale und Vorteile der Erfindung ergeben sich aus der nachfolgenden Beschreibung, in der ein Ausführungsbeispiel im einzelnen erläutert ist.

Ausführungsbeispiel:

Nach der DE-AS 2 902 079 wird ein Calciumsilikatgranulat mit Tobermoritstruktur hergestellt, das eine spezifische Oberfläche von 50 bis 60 m²/g nach BET $N_2$ und ein Verhältnis $CaO/SiO_2$ von 0,46 bis 0,51 aufweist. Dabei erfolgt die Härtung im Autoklaven bei 13 bar über 5 Stunden. Bei einer Produkttemperatur von maximal 100°C werden die Calciumsilikatgranulatkörner im Airless-Verfahren mit einer Zinksalzlösung besprüht. Dabei wird eine Oberflächenbelegung der einzelnen Körner von mindestens 50% erzielt. Als Sprühlösung wird eine Lösung bestehend aus 20 Gew.-% $ZnCl_2$, 33 Gew.-% $MgCl_2 \times 6\ H_2O$ und 47 Gew.-% Wasser eingesetzt. Bei einem Sprayanteil von 14%, bezogen auf das Endprodukt nach Gewicht, wird der gewünschte pH-Wert und der gewünschte Zinkgehalt erreicht.

Nach dem Besprühen wird das Produkt bei einer Temperatur von maximal 140°C getrocknet.

Das derart hergestellte, behandelte Calciumsilikatgranulat weist insbesondere für Katzenurin bekannten Tierstreumaterialien gegenüber überlegene Eigenschaften auf.

Neben dem im obigen Beispiel beschriebenen Streckmittel $MgCl_2 \times 6 H_2O$ können auch andere Alkali- und Erdalkalimetallsalze verwendet werden.

## Patentansprüche

1. Tierstreu aus oder mit einem Gehalt an festem Absorptionsmaterial, dessen pH-Wert, gemessen in wäßriger Aufschlämmung, zur Verbesserung der Geruchsbindung durch Behandlung mit einem wässerlöslichen Metallsalz der Gruppe Ib des Periodensystems abgesenkt ist, dadurch gekennzeichnet, daß das Absorptionsmaterial poröses Calciumsilikathydratgranulat ist, daß das Calciumsilikathydratgranulat mit wasserlöslichem Zinksalz behandelt ist; daß das getrocknete Calciumsilikathydratgranulat einen Zinkgehalt von 0,5–1,5 Gew.-% bei einem wasserlöslichen Zinkanteil von 0,01–100 ppm aufweist; und daß der pH-Wert des Calciumsilikathydratgranulates in wäßriger Aufschlämmung zwischen 7,5 und 8,5 liegt.

2. Tierstreu nach Anspruch 1, dadurch gekennzeichnet, daß der Zinkgehalt des Calciumsilikathydratgranulates 1–1,3 Gew.-% beträgt.

3. Tierstreu nach Anspruch 1, dadurch gekennzeichnet, daß das wasserlösliche Zinksalz Zinkchlorid ist.

4. Tierstreu nach einem der vorangehenden Ansprüche, dadurch gekennzeichnet, daß das wasserlösliche Zinksalz zusammen mit einem Alkali- und/oder Erdalkalisalz und/oder Mischungen derselben eingesetzt ist.

5. Verfahren zum Herstellen einer Tierstreu aus oder mit einem Gehalt an porösem Calciumsilikathydratgranulat, dessen pH-Wert, gemessen in wäßriger Aufschlämmung, zur Verbesserung der Geruchsbindung durch Behandlung mit einem wasserlöslichen Metallsalz der Gruppe Ib des Periodensystems abgesenkt wird, dadurch gekennzeichnet, daß das Calciumsilikathydratgranulat mit einer wäßrigen Lösung eines wasserlöslichen Zinksalzes derart behandelt wird, daß das getrocknete Calciumsilikathydratgranulat einen Zinkgehalt von 0,5–1,5 Gew.-% bei einem wasserlöslichen Zinkanteil von 0,01–100 ppm hat und der pH-Wert des Calciumsilikathydratgranulates in wäßriger Aufschlämmung zwischen 7,5 und 8,5 liegt.

6. Verfahren nach Anspruch 5, dadurch gekennzeichnet, daß die Behandlung des Calciumsilikathydratgranulates mit der wäßrigen Lösung des wasserlöslichen Zinksalzes so erfolgt, daß der Zinkgehalt des Calciumsilikathydratgranulates 1–1,3 Gew.-% beträgt.

7. Verfahren nach einem der Ansprüche 5 und 6, dadurch gekennzeichnet, daß bei der Behandlung des Calciumsilikathydratgranulates mit der wäßrigen Lösung des wasserlöslichen Zinksalzes dieser Lösung ein Alkali- und/oder Erdalkalisalz und/oder Mischungen derselben zugesetzt wird bzw. werden.

## Claims

1. Litter composed of or containing a solid absorption material the pH of which, measured in aqueous suspension, has been reduced by treatment with a watersoluble metal salt of group I b of the periodic system, in order to improve the fixation of odours, characterized in that the absorption material is porous calcium silicate hydrate granules, that the calcium silicate hydrate granules have been treated with a water-soluble zinc salt; that the dried calcium silicate hydrate granules have a zinc content of 0.5–1.5% by weight and a water-soluble zinc content of 0.01–100 ppm; and that the pH of the calcium silicate hydrate granules in an aqueous suspension is between 7.5 and 8.5.

2. Litter according to Claim 1, characterized in that the zinc content of the calcium silicate hydrate granules is 1–1.3% by weight.

3. Litter according to Claim 1 or 2, characterized in that the water-soluble zinc salt is zinc chloride.

4. Litter according to one of the preceding claims, characterized in that the water-soluble zinc salt is employed in conjunction with an alkali metal salt and/or alkaline earth metal salt and/or mixtures thereof.

5. Process for the preparation of litter composed of or containing porous calcium silicate hydrate granules the pH of which, measured in aqueous suspension, is reduced by treatment with a water-soluble metal salt of group I b of the periodic system, in order to improve the fixation of odours, characterized in that the calcium silicate hydrate granules are treated with an aqueous solution of a water-soluble zinc salt in such a way that the dried calcium silicate hydrate granules have a zinc content of 0.5–1.5% by weight and a water-soluble zinc content of 0.01–100 ppm and that the pH of the calcium silicate hydrate granules in an aqueous suspension is between 7.5 and 8.5.

6. Process according to Claim 5, characterized in that the treatment of the calcium silicate hydrate granules with the aqueous solution of the water-soluble zinc salt is carried out in such a way that the zinc content of the calcium silicate hydrate granules is 1–1.3% by weight.

7. Process according to one of Claims 5 and 6, characterized in that when the calcium silicate hydrate granules are treated with the aqueous solution of the water-soluble zinc salt an alkali metal salt and/or alkaline earth metal salt and/or mixtures thereof is/are added to this solution.

## Revendications

1. Litière faite à partir de, ou contenant une matière d'absorption solide, dont le pH, mesuré en suspension aqueuse, pour améliorer la captation de l'odeur par traitement avec un sel métallique soluble dans l'eau du groupe Ib de la Classification Périodique est abaissé, caractérisée en ce que l'absorbant est un granulé hydraté de silicate de calcium poreux, en ce que le granulé hydraté de silicate de calcium est traité avec un sel de zinc soluble dans l'eau; en ce que le granulé hydraté de silicate de calcium présente une teneur en zinc de 0,5–1,5% en poids, avec une fraction de zinc soluble dans l'eau de 0,01–100 ppm et en ce que le pH du granulé hydraté de silicate de calcium en suspension aqueuse se situe entre 7,5 et 8,5.

2. Litière selon la revendication 1, caractérisée en ce que la teneur en zinc du granulé hydraté de silicate de calcium s'élève à 1–1,3% en poids.

3. Litière selon la revendication 1 ou 2, caractérisée en ce que le sel de zinc soluble dans l'eau est le chlorure de zinc.

4. Litière selon l'une des revendications précédentes, caractérisée en ce que le sel de zinc soluble dans l'eau est utilisé avec un sel de métal alcalin et/ou alcalino-terreux et/ou des mélanges de ces corps.

5. Procédé de préparation d'une litière à partir de ou contenant du granulé hydraté de silicate de calcium poreux, dont le pH, mesuré en suspension aqueuse, pour améliorer le captage de l'odeur, est abaissé par traitement avec un sel métallique soluble dans l'eau du groupe Ib de la Classification Périodique, caractérisé en ce que le granulé hydraté de silicate de calcium est traité avec une solution aqueuse d'un sel de zinc soluble dans l'eau de manière que le granulé hydraté de silicate de calcium séché présente une teneur en zinc de 0,5–1,5% en poids avec une fraction de zinc soluble dans l'eau de 0,01–100 ppm et en ce que le pH du granulé hydraté de silicate de calcium en suspension aqueuse se situe entre 7,5 et 8,5.

6. Procédé selon la revendication 5, caractérisé en ce que le traitement du granulé hydraté de silicate de calcium avec la solution aqueuse du sel de zinc soluble dans l'eau est effectué de manière que la teneur en zinc du granulé hydraté de silicate de calcium s'élève à 1–1,3% en poids.

7. Procédé selon l'une quelconque des revendications 5 et 6, caractérisé en ce que dans le traitement du granulé hydraté de silicate de calcium avec la solution aqueuse du sel de zinc soluble dans l'eau on ajoute à cette solution un sel de métal alcalin et/ou alcalino-terreux et/ou des mélanges de ces corps.